(19) Europäisches Patentamt
European Patent Office
Office européen des brevets

(11) **EP 2 431 592 B1**

(12) **EUROPEAN PATENT SPECIFICATION**

(45) Date of publication and mention
of the grant of the patent:
**18.06.2014 Bulletin 2014/25**

(51) Int Cl.:
*F02D 19/08* (2006.01)          *F02D 41/02* (2006.01)
*F02D 41/14* (2006.01)

(21) Application number: **10774870.9**

(22) Date of filing: **10.05.2010**

(86) International application number:
**PCT/JP2010/057855**

(87) International publication number:
**WO 2010/131613 (18.11.2010 Gazette 2010/46)**

(54) **CONTROL DEVICE FOR INTERNAL COMBUSTION ENGINE**

STEUERUNGSVORRICHTUNG FÜR EINEN VERBRENNUNGSMOTOR

DISPOSITIF DE COMMANDE POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **12.05.2009 JP 2009115724**

(43) Date of publication of application:
**21.03.2012 Bulletin 2012/12**

(73) Proprietor: **Keihin Corporation
Shinjuku-ku
Tokyo 163-0539 (JP)**

(72) Inventor: **ISHIKAWA Shinichi
Shioya-gun
Tochigi 329-1233 (JP)**

(74) Representative: **Trossin, Hans-Jürgen et al
Weickmann & Weickmann
Postfach 860 820
81635 München (DE)**

(56) References cited:
**JP-A- 4 203 334          JP-A- 63 005 131
JP-A- 2005 048 625     JP-A- 2007 056 730
JP-A- 2009 079 496     JP-A- 2009 079 582
US-A1- 2009 024 304   US-A1- 2009 082 947
US-A1- 2009 177 370**

**Description**

TECHNICAL FIELD

This invention relates to a control apparatus for an internal combustion engine, particularly to a control apparatus for an internal combustion engine to be operated with gasoline fuel, especially with alcohol-blend fuel containing alcohol such as methanol, ethanol or the like.

BACKGROUND ART

Conventionally, in a control apparatus for an internal combustion engine that can be operated with gasoline fuel or alcohol-blend fuel, in order to effectively purify exhaust gas through a catalytic converter installed at an exhaust pipe, an oxygen concentration sensor is provided at the exhaust pipe and based on an output of the sensor, a fuel injection amount is corrected so that an air/fuel ratio of the engine converges to (becomes the same as) the stoichiometric air/fuel ratio, i.e., the so-called feedback control is performed (see Patent Reference 1, for instance).

The technique of Patent Reference 1 is configured to calculate a feedback correction coefficient based on the output of the oxygen concentration sensor and correct the fuel injection amount with the calculated feedback correction coefficient. The feedback correction coefficient is changed in accordance with an alcohol content of the fuel, more specifically, since the stoichiometric air/fuel ratio varies to the richer side with increasing alcohol content, the feedback correction coefficient is changed in a direction to increase the fuel injection amount, accordingly.

PRIOR ART REFERENCE

Patent Reference

Japanese Laid-Open Patent Application No. Sho 63(1988)-5131

SUMMARY OF INVENTION

Problems to be solved by the invention

Also when the engine operation is in an operation area in which the feedback control is implemented (e.g., during low temperature operation, engine start operation, transient operation including acceleration or deceleration, high-load operation, etc.), it is necessary to correct the fuel injection amount in accordance with the alcohol content. Since, as mentioned above, the feedback correction coefficient is changed depending on the alcohol content, the feedback correction coefficient could be applicable as an alcohol content correction coefficient corresponding to the alcohol content, thereby correcting the fuel injection amount.

However, the feedback correction coefficient is also changed depending on, in addition to the alcohol content, a machine difference (individual difference or production tolerance; caused by mass production, aging, etc.) that exists among engines, in other words, the coefficient is originally a value to be affected by such the machine difference. Consequently, if the feedback correction coefficient is directly applied as the alcohol content correction coefficient, it hinders the appropriate correction of the fuel injection amount in accordance with the alcohol content, so that the fuel correction control accuracy deteriorates, disadvantageously.

An object of this invention is therefore to overcome the foregoing drawback by providing a control apparatus for an internal combustion engine that can correct the fuel injection amount to be the optimal value in accordance with the alcohol content even when the engine operation is in the operation area in which the feedback control is not implemented, thereby improving the fuel correction control accuracy.

Means for solving the problems

In order to achieve the object, as recited in claim 1 mentioned below, this invention is configured to have an apparatus for controlling an internal combustion engine having a feedback control means for implementing feedback control to detect an air/fuel ratio of exhaust gas of the engine, calculate a feedback correction coefficient of a fuel injection amount based on the detected air/fuel ratio and correct the fuel injection amount with the calculated feedback correction coefficient, characterized by area setting means for dividing an operation area of the engine into a plurality of areas based on an engine speed and load and setting one of the areas as a reference area; machine difference correction coefficient storing means for calculating a ratio of the feedback correction coefficient calculated when operation of the engine is in the reference area to the feedback correction coefficient calculated when the operation of the engine is out of the reference area and storing the ratio as a machine difference correction coefficient used for correcting an individual difference of the engine; and an alcohol content correction coefficient storing means for calculating an alcohol content correction coefficient in accordance with an alcohol content of fuel based on the calculated feedback correction coefficient, correcting the calculated alcohol content correction coefficient with the stored machine difference correction coefficient and storing the corrected alcohol content correction coefficient, wherein the fuel injection amount is corrected with the corrected alcohol content correction coefficient when the operation of the engine is in an operation area in which the feedback control is not implemented.

As recited in claim 2 mentioned below, in the apparatus, the area setting means sets two or more areas other than the reference area and the machine difference correction coefficient storing means replaces the feedback correction coefficient to be calculated when the operation of the engine is in the reference area by the alcohol content correction coefficient calculated when the operation of the engine is in one of the two or more areas other than the reference area if the feedback correction coefficient has not been calculated when the operation of the engine was in the reference area.

As recited in claim 3 mentioned below, in the apparatus, the area setting means sets the reference area based on a type of a vehicle in which the engine is installed.

Effects of the invention

The control apparatus for an internal combustion engine mentioned in claim 1 is configured to divide an operation area of the engine into a plurality of areas and set one of the areas as a reference area; calculate a ratio of the feedback correction coefficient calculated when operation of the engine is in the reference area to the feedback correction coefficient calculated when the operation of the engine is out of the reference area and store the ratio as a machine difference correction coefficient; and calculate an alcohol content correction coefficient based on the feedback correction coefficient, correct the alcohol content correction coefficient with the machine difference correction coefficient and store the alcohol content correction coefficient, wherein the fuel injection amount is corrected with the corrected alcohol content correction coefficient when the operation of the engine is in an operation area in which the feedback control is not implemented. With this, even when the engine operation is in the operation area in which the feedback control is not implemented, the fuel injection amount can be corrected with the alcohol content correction coefficient that was corrected so as not to be affected by the machine difference, i.e., can be corrected to be the optimal value in accordance with the alcohol content, thereby improving the fuel correction control accuracy.

Further, since it is configured to correct the fuel injection amount in accordance with the alcohol content without installment of a sensor, etc., for detecting the alcohol content of the fuel, it becomes possible to avoid the increase in cost and the complicated structure of the apparatus.

The apparatus mentioned in claim 2 is configured to set two or more areas other than the reference area and the machine difference correction coefficient storing means replaces the feedback correction coefficient to be calculated when the operation of the engine is in the reference area by the alcohol content correction coefficient calculated when the operation of the engine is in one of the two or more areas other than the reference area if the feedback correction coefficient has not been calculated when the operation of the engine was in the reference area. In other words, even if the engine operation is not in the reference area and the feedback correction coefficient at that time is not calculated, the feedback correction coefficient calculated when the engine operation is in the reference area is replaced by the alcohol content correction coefficient calculated when the engine operation is in one of the areas other than the reference area to calculate the aforesaid ratio, and the calculated ratio is stored as the machine difference correction coefficient. With this, in addition to the above effects, it becomes possible to correct the alcohol content correction coefficient with the stored machine difference correction coefficient and then correct the fuel injection amount with the corrected alcohol content correction coefficient. Therefore, the fuel injection amount can be reliably corrected to be the optimal value in accordance with the alcohol content.

The apparatus mentioned in claim 3 is configured such that the area setting means sets the reference area based on a type of a vehicle in which the engine is installed. With this, in addition to the above effects, it becomes possible to set the reference area with the operation area in which the machine difference is hardly seen separately for respective vehicle types and therefore, calculate the machine difference correction coefficient more accurately, thereby further improving the fuel correction control accuracy.

BRIEF DESCRIPTION OF DRAWINGS

FIG. 1 is an overall schematic view of a control apparatus for an internal combustion engine according to an embodiment of this invention.

FIG. 2 is a block diagram showing an overall configuration of an ECU shown in FIG. 1.

FIG. 3 is a flowchart showing the operation of the apparatus shown in FIG. 1.
FIG. 4 is a subroutine flowchart of an initial value setting process of FIG. 3.
FIG. 5 is a subroutine flowchart of a feedback correction coefficient calculating process of FIG. 3.
FIG. 6 is a subroutine flowchart of an operation area determining process of FIG. 3.
FIG. 7 is a graph for explaining operation area setting used in the FIG. 6 flowchart.
FIG. 8 is a subroutine flowchart of a machine difference correction coefficient calculating process of FIG. 3.
FIG. 9 is a subroutine flowchart showing an alcohol content correction coefficient calculating process of FIG. 3.
FIG. 10 is a flowchart showing the operation of the apparatus conducted concurrently with the FIG. 3 flowchart.

DESCRIPTION OF EMBODIMENT

An embodiment for carrying out a control apparatus for an internal combustion engine according to the present invention will now be explained with reference to the attached drawings.

Embodiment

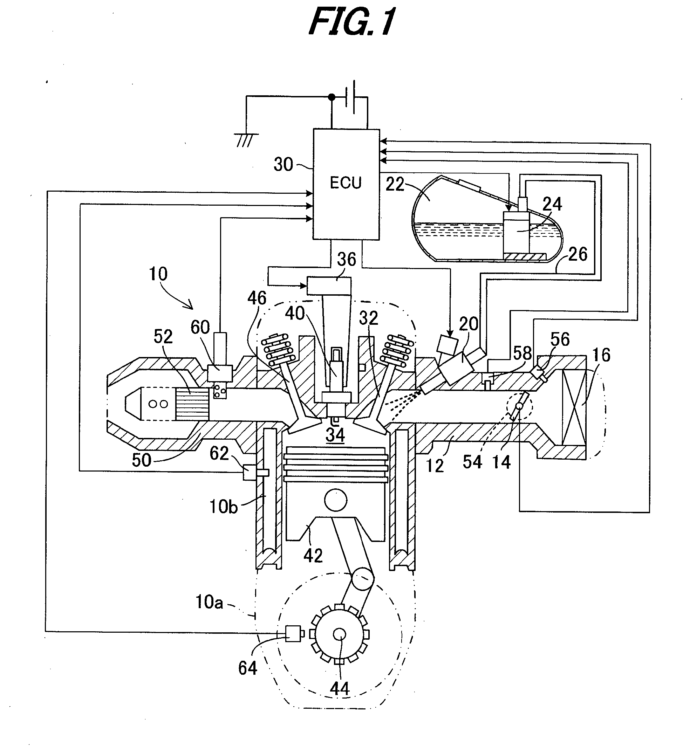

FIG. 1 is an overall schematic view of a control apparatus for an internal combustion engine according to an embodiment of this invention.
In FIG. 1, reference symbol 10 designates an internal combustion engine (hereinafter called the "engine") installed in a vehicle (e.g., a motorcycle), which is not shown. The engine 10 is a 4-cycle, single-cylinder, water-cooled engine having a displacement of 250 cc or thereabout. Reference symbol 10a designates a crankcase of the engine 10.
A throttle valve 14 is installed in an air intake pipe 12 of the engine 10. The throttle valve 14 is mechanically connected through a throttle wire to an accelerator (throttle grip) (neither shown) that is provided at a handle bar of the vehicle to be manually operable by the operator. The throttle valve 14 is opened and closed in accordance with a manipulation amount of the accelerator to regulate an amount of intake air sucked from an air cleaner 16 and passing through the air intake pipe 12 to enter the engine 10.
An injector 20 is installed near an air intake port downstream of the throttle valve 14 in the air intake pipe 12. Fuel stored in a fuel tank 22 is pumped by a fuel pump 24 installed in the fuel tank 22 and forwarded to the injector 20 through a fuel supply pipe 26.
As the fuel stored in the tank 22, gasoline or mixed fuel containing gasoline and alcohol (e.g., methanol (methyl alcohol), ethanol (ethyl alcohol), etc.), more precisely, fuel between 100 percent gasoline fuel (i.e., 0 percent alcohol) and a blend of 70 percent gasoline and 30 percent alcohol (E30), is planned to be used. In the case of using alcohol-mixed fuel, the stoichiometric air/fuel ratio is shifted to the richer side compared to the case of using gasoline fuel and the more the alcohol content is increased, the more greatly it is shifted.
The injector 20 is electrically connected to a drive circuit (not shown in FIG. 1) of an Electronic Control Unit (ECU) 30. Upon being supplied with an injector drive signal indicating an opening time period from the ECU 30 through the drive circuit, the injector 20 is opened to inject fuel to the air intake port by an amount corresponding to the opening time period. The injected fuel mixes with intake air to form an air-fuel mixture that flows into a combustion chamber 34 when an air intake valve 32 is opened.
The air-fuel mixture flowing into the combustion chamber 34 is ignited to burn by a spark discharge from a spark plug 40 supplied with high voltage from an ignition coil 36, thereby driving a piston 42 downward in FIG 1 to rotate a crankshaft 44. When an exhaust valve 46 is opened, the exhaust gas produced by the combustion passes through an exhaust pipe 50. A catalytic converter 52 having a three-way catalyst is installed in the exhaust pipe 50 for removing harmful components like HC, CO, NOx, etc., of the exhaust gas. The exhaust gas purified by the catalytic converter 52 flows further downstream to be discharged to the exterior of the engine 10.
A throttle opening sensor 54 constituted of a potentiometer is provided near the throttle valve 14 and produces an output or signal indicative of an opening TH (engine load) of the throttle valve 14. The air intake pipe 12 is installed on the upstream side of the throttle valve 14 with an intake air temperature sensor 56 that produces an output or signal corresponding to a temperature (intake air temperature) TA of intake air, and on the downstream side thereof with an absolute pressure sensor 58 that produces an output or signal indicative of manifold absolute pressure PBA.
An $O_2$ sensor (oxygen concentration sensor) 60 is installed upstream of the catalytic converter 52 in the exhaust pipe 50. The $O_2$ sensor 60 produces an output whose characteristics change in the vicinity of the stoichiometric air/fuel ratio. Specifically, the output voltage of the $O_2$ sensor 60 sharply changes in the vicinity of the stoichiometric air/fuel ratio. Accordingly, it is possible to determine whether an air/fuel ratio is lean or rich relative to the stoichiometric air/fuel ratio by comparing the output voltage of the $O_2$ sensor 60 with a reference voltage representing the stoichiometric air/fuel ratio.
A coolant temperature sensor 62 is attached to a coolant passage 10b of the cylinder block of the engine 10 and produces an output or signal corresponding to a temperature (engine coolant temperature) TW of the engine 10. A crank angle sensor 64 installed near the crankshaft 44 of the engine 10 outputs a crank angle signal at every predetermined crank angle (i.e., 20 degrees).

Outputs of the foregoing sensors such as the throttle opening sensor 54, $O_2$ sensor 60, crank angle sensor 54, etc., are inputted to the ECU 30.

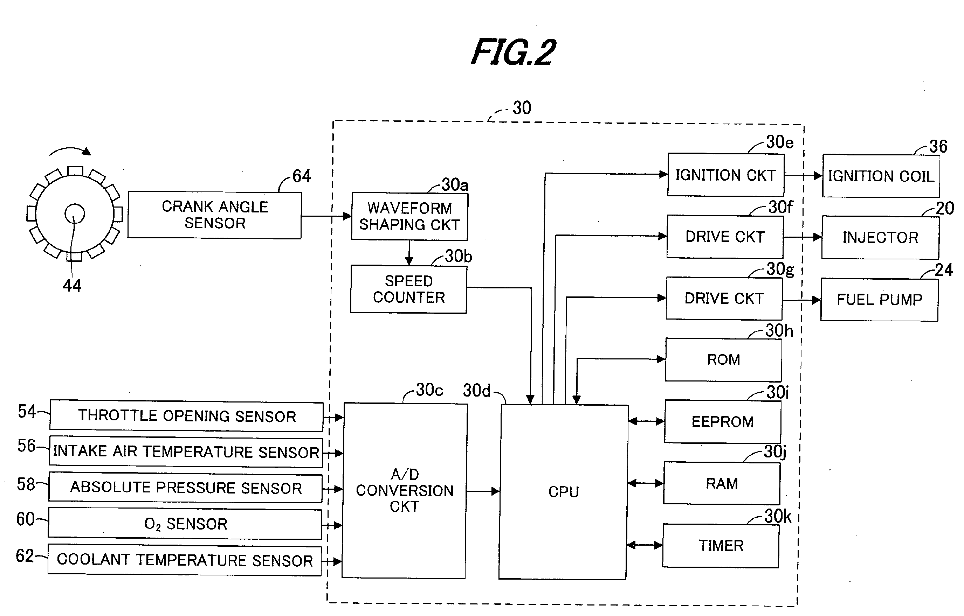

FIG. 2 is a block diagram showing an overall configuration of the ECU 30.

The ECU 30 includes a microcomputer having a waveform shaping circuit 30a, speed counter 30b, A/D conversion circuit 30c, CPU 30d, ignition circuit 30e, two drive circuits 30f and 30g, ROM 30h, EEPROM (nonvolatile memory) 30i, RAM 30j and timer 30k.

The waveform shaping circuit 30a waveform-shapes the output of the crank angle sensor 64 (signal waveform) to a pulse signal to be outputted to the speed counter 30b. The speed counter 30b counts the inputted pulse signals to detect (calculate) the engine speed NE and outputs a signal indicative of the engine speed NE to the CPU 30d. The A/D conversion circuit 30c inputted with the outputs of the throttle opening sensor 54, $O_2$ sensor 60 and other sensors converts analog signal values to digital signal values and outputs them to the CPU 30d.

Based on the converted digital signals, etc., the CPU 30d performs the calculation in accordance with a program stored in the ROM 30h and outputs an ignition control signal for the spark plug 36 to the ignition circuit 30e when the crank angle is positioned at ignition output timing (i.e., performs ignition timing control). Further, the CPU 30d similarly performs the calculation in accordance with a program stored in the ROM 30h and outputs an injector drive signal to the drive circuit 30f at fuel injection timing (performs fuel injection control) based on the inputted signals, etc., while outputting a fuel pump drive signal for driving the fuel pump 24 to the drive circuit 30g based on the inputted signals, etc.

Here, the explanation on the fuel injection control will be made. The CPU 30d calculates a fuel injection amount Tout to be supplied to the engine 10 (more exactly, calculates the opening time period of the injector 20) in accordance with the detected operating condition and outputs the injector drive signal based on the calculated fuel injection amount Tout.

An equation used for calculating the fuel injection amount Tout is different depending on whether the engine 10 operation is in an operation area in which the feedback control is implemented (i.e., in a feedback control area which will be explained later). Specifically, the fuel injection amount Tout is calculated through an equation 1 below when the engine 10 operation is in the operation area in which the feedback control is implemented, while being calculated through an equation 2 below when it is in an operation area in which the feedback control is not implemented (e.g., during low temperature operation, engine start operation, transient operation including acceleration or deceleration, high-load operation, etc.).

$$\text{Fuel injection amount Tout} = \text{Basic fuel injection amount Ti} \times \text{Feedback correction coefficient MHG} \times \text{Environmental correction term} \qquad \dots \text{Eq. 1}$$

$$\text{Fuel injection amount Tout} = \text{Basic fuel injection amount Ti} \times \text{Alcohol content correction coefficient MET} \times \text{Environmental correction term} \qquad \dots \text{Eq. 2}$$

In the equations 1 and 2, the basic fuel injection amount Ti is calculated by retrieving mapped values set in advance using the engine speed NE and manifold absolute pressure PBA. The feedback correction coefficient MHG of the equation 1 is calculated based on the output of the $O_2$ sensor 60, as explained later. Specifically, the output voltage VHG of the $O_2$ sensor 60 and the reference voltage VHGREF representing the stoichiometric air/fuel ratio are compared to determine whether the present air/fuel ratio is lean or rich, and the feedback correction coefficient MHG is incrementally reduced when it is rich and incrementally increased when it is lean.

Thus, the fuel injection amount Tout is feedback-controlled (PI-controlled) so that the air/fuel ratio of the engine 10 is converged to the stoichiometric air/fuel ratio. The environmental correction term of the equations 1 and 2 is calculated based on the intake air temperature TA, engine coolant temperature TW, etc. The alcohol content correction coefficient MET of the equation 2 is calculated based on the feedback correction coefficient MHG, etc., during the feedback control, as explained later in detail.

The explanation on FIG. 2 is resumed. Upon receipt of the ignition control signal sent from the CPU 30d, the ignition circuit 30e supplies current to the ignition coil 36 to carry out the ignition. Upon receipt of the injector drive signal sent from the CPU 30d, the drive circuit 30f drives the injector 20 to inject fuel. Upon receipt of the fuel pump drive signal sent from the CPU 30d, the drive circuit 30g drives the fuel pump 24.

The EEPROM 30i stores the calculated alcohol content correction coefficient MET and the like. In the RAM 30j, data such as the ignition timing and fuel injection amount calculated in the ignition timing control and fuel injection control, for example, are written in. The timer 30k is used for a process of time measurement conducted in an unshown program.

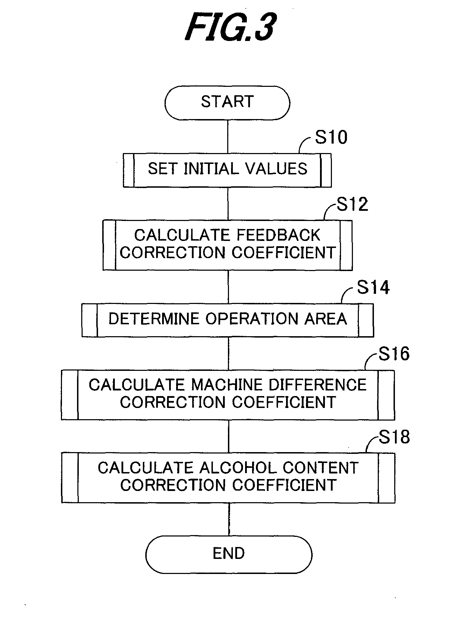

FIG. 3 is a flowchart showing the operation of the apparatus according to this embodiment. The illustrated program is executed by the ECU 30 at predetermined intervals (e.g., 20 milliseconds).

The program starts at S10, in which a process of setting initial values to several learning values, flags, etc., used in the calculations of the feedback correction coefficient MHG and alcohol content correction coefficient MET is conducted.

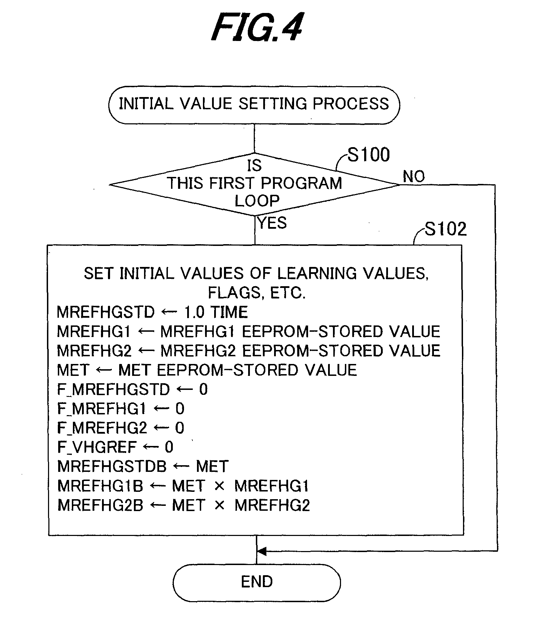

FIG. 4 is a subroutine flowchart of the initial value setting process. First in S 100, it is determined whether this program loop is the first program loop after the ECU 30 is activated. When the result in S100 is affirmative, the program proceeds to S102, in which initial values of learning values, flags, etc., are set.

To be specific, a machine difference learning value (reference area) MREFHGSTD (explained later) is set with 1.0 time and a machine difference learning value (first area) MREFHG1, a machine difference learning value (second area) MREFHG2, the alcohol content correction coefficient MET are set with values stored in the EEPROM 30i.

The bits of a reference area history flag F_MREFHGSTD, first area history flag F_MREFHG1, second area history flag F_MREFHG2 and $O_2$ sensor voltage determination flag F_VHGREF are all reset to 0. Further, a feedback correction coefficient average (reference area) MREFHGSTDB is set with the alcohol content correction coefficient MET, a feedback correction coefficient average (first area) MREFHG1B is set with a value obtained by multiplying the correction coefficient MET and the learning value (first area) MREFHG1, and a feedback correction coefficient average (second area) MREFHG2B is set with a value obtained by multiplying the correction coefficient MET and the learning value (second area) MREFHG2. When the result in S 100 is negative, the process of S102 is skipped.

Returning to the explanation on FIG. 3, the program proceeds to S12, in which a process of calculating the feedback correction coefficient MHG is conducted.

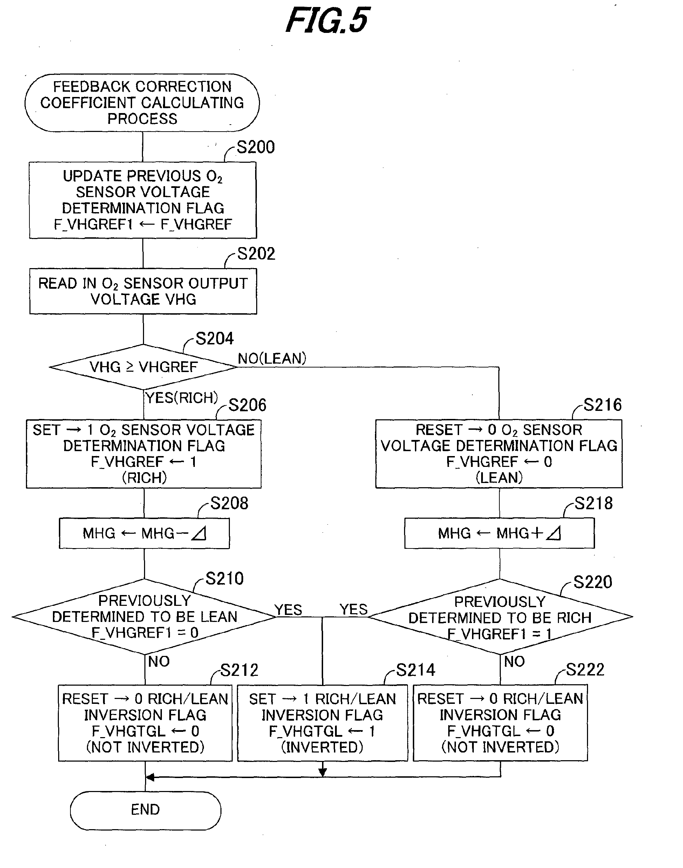

FIG. 5 is a subroutine flowchart of the feedback correction coefficient calculating process. As shown in FIG. 5, in S200, a previous $O_2$ sensor voltage determination flag F_VHGREF1 is updated, i.e., is set with the $O_2$ sensor voltage determination flag F_VHGREF (explained later) set in the previous program loop.

Next the program proceeds to S202, in which the output voltage VHG of the $O_2$ sensor is read in and to S204, in which the output voltage VHG is compared to the reference voltage VHGREF (e.g., 0.45 V) representing the stoichiometric air/fuel ratio to determine whether the present air/fuel ratio is lean or rich relative to the stoichiometric air/fuel ratio. Specifically, when the output voltage VHG is equal to or higher than the reference voltage VHGREF, it is determined to be righ and when the output voltage VHG is less than the reference voltage VHGREF, it is determined to be lean.

Thus, in S202 and S204, the air/fuel ratio of the exhaust gas of the engine 10 is detected based on the output voltage VHG of the $O_2$ sensor 60 and it is determined whether the detected air/fuel ratio is lean or rich relative to the stoichiometric air/fuel ratio.

When the result in S204 is affirmative, the program proceeds to S206, in which the bit of the $O_2$ sensor voltage determination flag F_VHGREF is set to 1. The bit of the flag F_VHGREF is set to 1 when the present air/fuel ratio is determined to be rich relative to the stoichiometric air/fuel ratio, while being reset to 0 when it is determined to be lean, as described later.

Next the program proceeds to S208, in which the feedback correction coefficient MHG is calculated by subtracting an integral addition and subtraction constant $\Delta$ from the feedback correction coefficient MHG (previous value) calculated in the previous program loop and the calculation result is set as the present value (i.e., the coefficient MHG is updated). As a result, when the engine 10 operation is in the operation area in which the feedback control is implemented, the fuel injection amount Tout is reduced in accordance with the above-mentioned equation 1, so that the air/fuel ratio is changed to the lean side and converged to the stoichiometric air/fuel ratio.

Next the program proceeds to S210, in which it is determined whether the bit of the previous $O_2$ sensor voltage determination flag F_VHGREF1 is 0, i.e., whether the air/fuel ratio was determined to be lean in the previous program loop. When the result in S210 is negative, i.e., when it is (was) determined to be rich in both the previous and present program loops, the program proceeds to S212, in which the bit of a rich and lean inversion flag F_VHGTGL is reset to 0, while when the result is affirmative, the program proceeds to S214, in which the bit of the flag F_VHGTGL is set to 1.

On the other hand, when the result in S204 is negative, the program proceeds to S216, in which the bit of the $O_2$ sensor voltage determination flag F_VHGREF is reset to 0 and to S218, in which a value obtained by adding the integral addition and subtraction constant $\Delta$ to the previous value of the feedback correction coefficient MHG is set as the present value of the feedback correction coefficient MHG (i.e., the coefficient MHG is updated). As a result, the fuel injection amount Tout is increased, so that the air/fuel ratio is changed to the rich side and converged to the stoichiometric air/fuel ratio.

Next the program proceeds to S220, in which it is determined whether the bit of the previous $O_2$ sensor voltage determination flag F_VHGREF1 is 1, i.e., whether the air/fuel ratio was determined to be rich in the previous program loop. When the result in S220 is negative, i.e., when it is (was) determined to be lean in both the previous and present program loops, the program proceeds to S222, in which the bit of the rich and lean inversion flag F_VHGTGL is reset to 0 and when the result is affirmative, the program proceeds to the aforesaid step of S214, in which the bit of the flag F_VHGTGL is set to 1. As can be seen above, setting the bit of the flag F-VHGTGL to 1 means that the air/fuel ratio is inverted from rich to lean or lean to rich, while resetting the same to 0 means that there is no inversion.

In the FIG. 3 flowchart, the program proceeds to S14, in which it is determined which operation area the engine 10 operation is in.

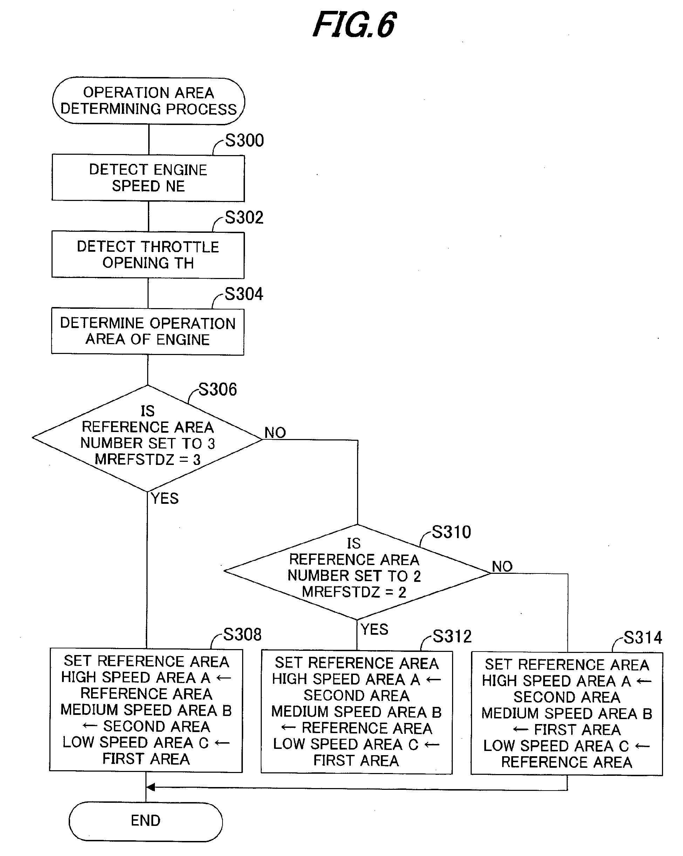

FIG. 6 is a subroutine flowchart of the operation area determining process of S14. As shown in FIG. 6, in S300, the engine speed NE is detected (calculated) based on the output of the crank angle sensor 64 and the program proceeds to S302, in which the throttle opening TH is detected (calculated) based on the output of the throttle opening sensor 54.

Next the program proceeds to S304, in which the operation area of the engine 10 is determined based on the detected engine speed NE and throttle opening TH (load). Specifically, a preset operation area chart is referred to using the engine speed NE and throttle opening TH to determine the operation area.

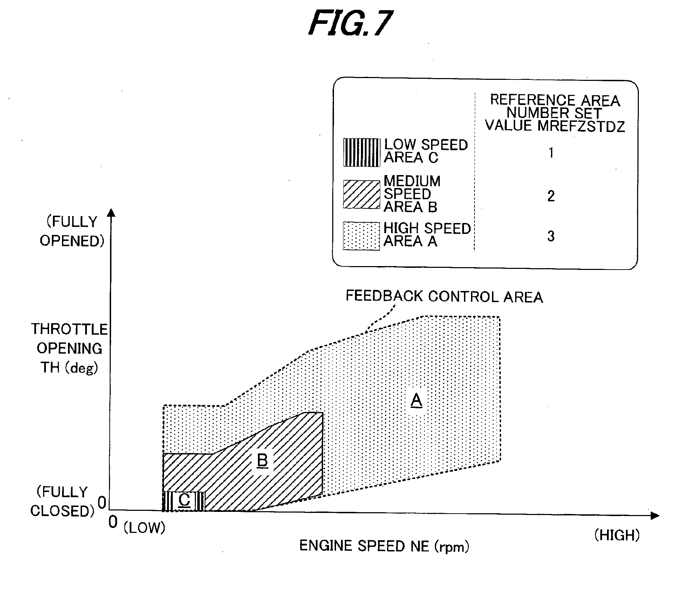

FIG. 7 is an explanatory graph of the operation area chart. Explaining FIG. 7, the operation area of the engine 10 is divided into an area in which the feedback control is implemented (an area surrounded by a dashed line in the figure; hereinafter called the "feedback control area") and an area of no feedback control (an area other than the area surrounded by the dashed line). As can be seen in the drawing, the area of no feedback control includes an area in which the engine speed NE and throttle opening TH are extremely high and wide-open (during the high load operation, etc.) or extremely low and narrow-open (during the engine start operation, etc.).

The feedback control area is further divided into a plurality of (three) areas, i.e., a high speed area A, medium speed area B and low speed area C based on the engine speed NE and throttle opening TH. More precisely, the high speed area A is defined with a relatively high engine speed NE and relatively wide throttle opening TH and with a low engine speed NE and moderately wide throttle opening TH.

The medium speed area B is defined with a medium engine speed NE of lower than the engine speed NE of the high speed area A and a throttle opening TH of smaller than the throttle opening TH of the high speed area A (indicated by diagonal lines in the drawing). The low speed area C is defined with a low engine speed NE of lower than the engine speed NE of the medium speed area B and a throttle opening TH of smaller than the throttle opening TH of the medium speed area B (indicated by vertical lines in the drawing).

Thus, in S304 of FIG. 6, the FIG. 7 explanatory graph is referred to based on the engine speed NE and throttle opening TH to determine which area among the foregoing operation areas (the feedback control area (high speed area A, medium speed area B, low speed area C) and the area other than the feedback control area) the engine 10 operation is in.

Next the program proceeds to S306, in which it is determined whether a reference area number MREFSTDZ is 3. This value MREFSTDZ, which will be explained in further detail, is set with one of values 1, 2 and 3 depending on a type (model) of a vehicle in advance.

When the result in S306 is affirmative, the program proceeds to S308, in which one of the aforementioned three areas (high speed area A, medium speed area B, low speed area C) is set as a reference area to be used as the reference when calculating a machine difference correction coefficient MREFHG (explained later). Specifically, the high speed area A is set as the reference area. Further, the low speed area C and medium speed area B which are areas other than the reference area (in this case, the high speed area A) are set as a first area and second area, respectively.

When the result in S306 is negative, the program proceeds to S310, in which it is determined whether the value MREFSTDZ is 2. When the result in S310 is affirmative, the program proceeds to S312, in which the medium speed area B is set as the reference area, and the low speed area C and high speed area A which are areas other than the reference area (in this case, the medium speed area B) are set as the first area and second area, respectively.

When the result in S310 is negative, i.e., when the value MREFSTDZ is 1, the program proceeds to S314, in which the low speed area C is set as the reference area, and the medium speed area B and high speed area A which are areas other than the reference area (in this case, the low speed area C) are set as the first area and second area, respectively.

The foregoing process of S306 to S314 will be explained in detail. Since the reference area is used as the reference for calculating the machine difference correction coefficient MREFHG, it is preferable to set it with an operation area in which the machine difference (individual difference or production tolerance; caused by mass production, aging, etc.) of the engine 10 is hardly seen. However, the operation area in which the machine difference is hardly seen is different depending on a vehicle type.

Therefore, in this embodiment, the operation area in which the machine difference is hardly seen is experimentally determined in advance with respect to each vehicle type. In the case where the determined operation area is the high speed area A, the value MREFSTDZ is set with 3, in the case of the medium speed area B, it is set with 2, and in the case of the low speed area C, it is set with 1. Owing to this configuration, in S306 to S314, the reference area can be appropriately set with the operation area in which the machine difference is hardly seen separately for the respective vehicle types, while the operation area in which the machine difference tends to be seen can be set to the first and second operation areas.

Returning to the explanation on FIG. 3, the program proceeds to S16, in which a process of calculating the machine difference correction coefficient MREFHG.

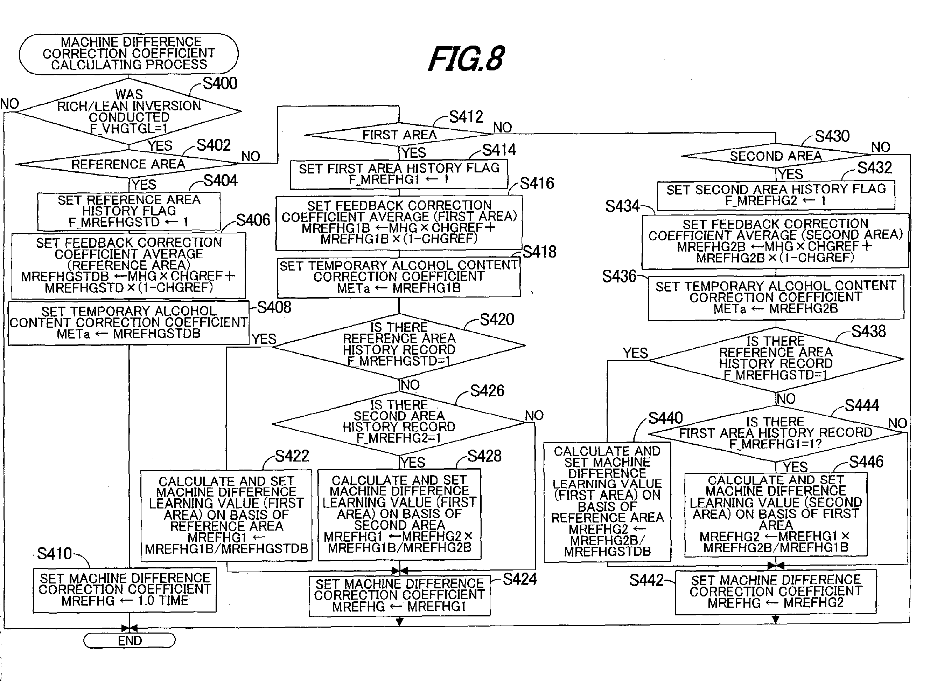

FIG. 8 is a subroutine flowchart of the machine difference correction coefficient calculating process. The explanation will be made with reference to the figure. In S400, it is determined whether the bit of the rich and lean inversion flag F_VHGTGL is 1, i.e., whether the air/fuel ratio of the engine 10 is inverted from rich to lean or lean to rich. When the result in S400 is negative, the remaining steps are skipped, while when the result is affirmative, the program proceeds to S402, in which it is determined whether the operation area of the engine 10 determined in S304 above is the reference area set in any of the steps of S308, S312 and S314.

When the result in S402 is affirmative, the program proceeds to S404, in which the bit of the reference area history flag F_MREFHGSTD is set to 1. Thus, setting the bit of the flag F_MREFHGSTD to 1 means that the engine 10 operation is in the reference area and there exists a record of the fact that the feedback correction coefficient average (reference area) MREFHGSTDB was calculated in a step described later, while setting the same to 0 means that there is no such a record.

Next the program proceeds to S406, in which the feedback correction coefficient average (reference area) MREFHGSTDB is calculated and set. Specifically, a value obtained by adding a product obtained by multiplying the feedback correction coefficient MHG by a filtering coefficient CHGREF (e.g., 0.01 time) to a product obtained by multiplying the machine difference learning value (reference area) MREFHGSTD by a difference obtained by subtracting the filtering coefficient CHGREF from 1, is set as the average (reference area) MREFHGSTDB.

Next the program proceeds to S408, in which the average (reference area) MREFHGSTDB is set as a temporary alcohol content correction coefficient METa. Thus the temporary alcohol content correction coefficient METa in accordance with the alcohol content of the fuel is calculated based on the feedback correction coefficient MHG, more exactly, the feedback correction coefficient MHG is subjected to the filtering processing (i.e., is averaged) so that the average (reference area) MREFHGSTDB with which the air/fuel ratio of the engine 10 can be converged to the stoichiometric air/fuel ratio that varies in accordance with the alcohol content is calculated and the calculated average MREFHGSTDB is set as the temporary alcohol content correction coefficient METa.

Next the program proceeds to S410, in which the machine difference correction coefficient MREFHG is set with 1.0 time (which means no machine difference correction), whereafter the program is terminated.

On the other hand, when the result in S402 is negative, the program proceeds to S412, in which it is determined whether the engine 10 operation is in the first area. When the result in S412 is affirmative, the program proceeds to S414, in which the bit of the first area history flag F_MREFHG1 is set to 1. Thus, setting the flag F_MREFHG1 to 1 means that the engine 10 operation is in the first area and there exists a record of the fact that the feedback correction coefficient average (first area) MREFHG1B was calculated in a step described later, while resetting the same to 0 means that there is no such a record.

Next the program proceeds to S416, in which the average (first area) MREFHG1B is calculated and set. Specifically, similarly to S406, the feedback correction coefficient MHG is subjected to the filtering processing, more exactly, a value obtained by adding a product obtained by multiplying the feedback correction coefficient MHG by the filtering coefficient CHGREF to a product obtained by multiplying a previous value of the average (first area) MREFHG1B by a difference obtained by subtracting the filtering coefficient CHGREF from 1, is set as a present value of the average (first area) MREFHG1B.

Next the program proceeds to S418, in which the average (first area) MREFHG1B calculated in S416 is set as the temporary alcohol content correction coefficient METa.

Next the program proceeds to S420, in which it is determined whether the bit of the reference area history flag F_MREFHGSTD is 1, i.e., whether there exists a record of the fact that the average (reference area) MREFHGSTDB was calculated based on the feedback correction coefficient MHG of when the engine 10 operation is in the reference area.

When the result in S420 is affirmative, the program proceeds to S422, in which the machine difference learning value (first area) MREFHG1 used for correcting the individual difference of the engine 10 is calculated and set. Specifically, a ratio of the average (first area) MREFHG1B calculated in S416 to the average (reference area) MREFHGSTDB calculated in S406 (more precisely, a value obtained by dividing the average (first area) MREFHG1B by the average (reference area) MREFHGSTDB) is set as the machine difference learning value (first area) MREFHG1.

Next the program proceeds to S424, in which the calculated machine difference learning value (first area) MREFHG1 is set (stored) as the machine difference correction coefficient MREFHG. Thus, the ratio of the average (reference area) MREFHGSTDB of the feedback correction coefficient MHG calculated when the engine 10 operation is in the reference area to the average (first area) MREFHG1B of the feedback correction coefficient MHG calculated when the engine 10 operation is out of the reference area, i.e., is in one of the areas other than the reference area (in this case, the first area), is calculated and stored as the machine difference correction coefficient MREFHG used for correcting the individual difference of the engine 10.

On the other hand, when the result in S420 is negative, i.e., when there is no record of the fact that the average (reference area) MREFHGSTDB of the feedback correction coefficient MHG of when the engine 10 operation is in the reference area was calculated, the program proceeds to S426, in which it is determined whether the bit of the second area history flag F_MREFHG2 is 1. The bit of the flag F_MREFHG2 is set to 1 when there exists a record of the fact that the average (second area) MREFHG2B was calculated based on the feedback correction coefficient MHG of when the engine 10 operation is in the second area, and reset to 0 when there is no such a record, as will be explained later.

When the result in S426 is affirmative, i.e., when the average (second area) MREFHG2B was calculated from the feedback correction coefficient MHG in one of the areas other than the first area (in this case, the second area) immediately before this step, the program proceeds to S428, in which the machine difference learning value (first area) MREFHG1 is calculated on the basis of the second area. The machine difference learning value (first area) MREFHG1 is calculated by multiplying the machine difference learning value (second area) MREFHG2 calculated in the second area by the ratio of the feedback correction coefficients of the first and second areas (more precisely, a value obtained by dividing (the average of) the first area feedback correction coefficient by (the average of) the second area feedback correction coefficient).

$$\text{Machine difference learning value (first area) } MREFHG1 = \text{Machine difference}$$
$$\text{learning value (second area) } MREFHG2 \times \text{Feedback correction coefficient average (first}$$
$$\text{area) } MREFHG1B \text{ / Feedback correction coefficient average (second area)}$$
$$MREFHG2B \qquad\qquad \dots \text{Eq. 3}$$

Here, the machine difference learning value (first area) MREFHG1 calculated in S422 or S428 will be explained in detail. First the relationship between the reference area, the first area and the second area, i.e., a relative ratio of the calculated feedback correction coefficients of the three areas are assumed to be the machine difference. Since the feedback correction coefficient calculated in the reference area with no machine difference is equivalent to the alcohol content correction coefficient, the machine difference learning value (machine difference correction coefficient MREFHG) is defined 1.0 time (S410).

On the basis of the reference area machine difference learning value defined 1.0 time, the first and second area machine difference learning values (MREFHG1, MREFHG2) are numerically calculated. For instance, when the machine difference learning value of the reference area has been calculated as 1.0 time, that of the first area as 1.1 times and that of the second area as 1.2 times, a ratio of the first and second area machine difference learning values can be calculated as follows; the machine difference learning value (first area) MREFHG1 is 0.917 time of the machine difference learning value (second area) MREFHG2 and the value (second area) MREFHG2 is 1.09 times of the value (first area) MREFHG 1.

In the case of taking the reference and first areas as an example, as mentioned in S422, a ratio of the feedback correction coefficients calculated in those areas is calculated as the machine difference learning value (first area) MREFHG1. Consequently, in the reference and first areas, the ratio of the feedback correction coefficients of those areas can be said to be equivalent to a ratio of the machine difference learning values thereof.

Similarly in the case of taking the first and second areas as an example, a ratio of the feedback correction coefficients of those areas can be said to be equivalent to a ratio of the machine difference learning values thereof. Therefore, when, for instance, the feedback correction coefficient is calculated in the first area after the feedback correction coefficient is calculated in the second area, the first area machine difference learning value MREFHG1 can be calculated by multiplying the second area machine difference learning value MREFHG2 by the ratio of the feedback correction coefficients of the first and second areas, as mentioned in S428. The machine difference learning value MREFHG2 used in the calculation of the machine difference learning value MREFHG1 is a ratio of the machine difference learning values of the second and reference areas to be calculated based on the machine difference that exists relative to the reference area.

The equation 3 can be modified as below.

Machine difference learning value (first area) MREFHG1 = Feedback correction coefficient average (first area) MREFHG1B x Machine difference learning value (second area) MREFHG2 / Feedback correction coefficient average (second area) MREFHG2B ... Eq. 3-1

As described later, in the second area, since the value MREFHG2 is the machine difference correction coefficient MREFHG and the value MREFHG2B is the temporary alcohol content correction coefficient METa, the "MREFHG2 / MREFHG2B" in the above equation 3-1 is to be a reciprocal of the alcohol content correction coefficient MET calculated in the second area.

Accordingly, the equation 3-1 is equivalent to the following equation.

Machine difference learning value (first area) MREFHG1 = Feedback correction coefficient average (first area) MREFHG1B / Alcohol content correction coefficient MET (calculated in the second area) ... Eq. 3-2

As is clear from the comparison of the equation 3-2 with the equation shown in S422, the equation 3-2 can be obtained by replacing the feedback correction coefficient (precisely, the average (reference area) MREFHGSTDB) in the equation of S422 by the alcohol content correction coefficient MET calculated in the second area.

To be more specific, in S428, if the feedback correction coefficient has not been calculated when the engine 10 operation was in the reference area, the feedback correction coefficient to be calculated in the reference area is replaced by the alcohol content correction coefficient MET calculated when the engine 10 operation is in one of the areas other than the reference area (in this case, the second area).

Subsequently the program proceeds to S424 mentioned above, in which the calculated machine difference learning value (first area) MREFHG1 is set (stored) as the machine difference correction coefficient MREFHG. When the result in S426 is negative, the step of S428 is skipped and the program proceeds to S424. In this case, since the stored value set in S 102 remains as the machine difference learning value (first area) MREFHG1, this stored value is set also as the machine difference correction coefficient MREFHG.

When the result in S412 is negative, the program proceeds to S430, in which it is determined whether the engine 10 operation is in the second area. When the result in S430 is negative, i.e., when the engine 10 operation is not in any of the reference, first and second areas (i.e., not in the feedback control area), the remaining steps are skipped. When the result in S430 is affirmative, the program proceeds to S432.

The process of S432 to S446 is conducted to calculate the machine difference correction coefficient MREFHG similarly to the aforementioned process of S414 to S428.

Specifically, in S432, the bit of the second area history flag F_MREFHG2 is set to 1. As mentioned in the foregoing, setting the flag F_MREFHG2 to 1 means that there exists a record of the fact that the average (second area) MREFHG2B was calculated, while resetting the same to 0 means that there is no such a record.

Next the program proceeds to S434, in which the average (second area) MREFHG2B is calculated and set. Specifically, similarly to S416, a value obtained by adding a product obtained by multiplying the feedback correction coefficient MHG by the filtering coefficient CHGREF to a product obtained by multiplying a previous value of the average (second area) MREFHG2B by a difference obtained by subtracting the filtering coefficient CHGREF from 1, is set as a present value of the average (second area) MREFHG2B.

Next the program proceeds to S436, in which the calculated average (second area) MREFHG2B is set as the temporary alcohol content correction coefficient METa and to S438, in which it is determined whether the bit of the reference area history flag F_MREFHGSTD is 1.

When the result in S438 is affirmative, the program proceeds to S440, in which a ratio of the average (second area) MREFHG2B calculated in S434 to the average (reference area) MREFHGSTDB calculated in S406 (more precisely, a value obtained by dividing the average (second area) MREFHG2B by the average (reference area) MREFHGSTDB) is set as the machine difference learning value (second area) MREFHG2.

Next the program proceeds to S442, in which the calculated machine difference learning value (second area) MREFHG2 is set (stored) as the machine difference correction coefficient MREFHG. Thus, the ratio of the average (reference area) MREFHGSTDB of the feedback correction coefficient MHG calculated when the engine 10 operation is in the reference area to the average (second area) MREFHG2B of the feedback correction coefficient MHG calculated when the engine 10 operation is out of the reference area, i.e., is in one of the areas other than the reference area (in this case, the second area), is calculated and stored as the machine difference correction coefficient MREFHG.

On the other hand, when the result in S438 is negative, the program proceeds to S444, in which it is determined whether the bit of the first area history flag F_MREFHG1 is 1 and when the result is affirmative, the program proceeds to S446, in which the machine difference learning value (second area) MREFHG2 is calculated on the basis of the first area. The machine difference learning value (second area) MREFHG2 is calculated by multiplying the machine difference learning value (first area) MREFHG1 calculated in the first area by the ratio of the feedback correction coefficients of the first and second areas (more precisely, a value obtained by dividing (the average of) the second area feedback correction coefficient by (the average of) the first area feedback correction coefficient), as described in the equation 4 below.

$$\text{Machine difference learning value (second area) MREFHG2} = \text{Machine difference learning value (first area) MREFHG1} \times \text{Feedback correction coefficient average (second area) MREFHG2B} / \text{Feedback correction coefficient average (first area) MREFHG2B}$$

$$\dots \text{Eq. 4}$$

The equation 4 can be modified as below, similarly to the equation 3 in S428.

$$\text{Machine difference learning value (second area) MREFHG2} = \text{Feedback correction coefficient average (second area) MREFHG2B} / \text{Alcohol content correction coefficient MET (calculated in the first area)}$$

$$\dots \text{Eq. 4-1}$$

Specifically, also in S446, if the feedback correction coefficient has not been calculated when the engine 10 operation was in the reference area is not calculated, the feedback correction coefficient to be calculated in the reference area is replaced by the alcohol content correction coefficient MET calculated when the engine 10 operation is in one of the areas other than the reference area (in this case, the first area).

Subsequently the program proceeds to S442 mentioned above, in which the calculated machine difference learning value (second area) MREFHG2 is set (stored) as the machine difference correction coefficient MREFHG. When the result in S444 is negative, the step of S446 is skipped and the program proceeds to S442. In this case, since the stored value set in S102 remains as the machine difference learning value (second area) MREFHG2, this stored value is set also as the machine difference correction coefficient MREFHG.

In the FIG. 3 flowchart, the program proceeds to S 18, in which a process of calculating (correcting) the alcohol content correction coefficient MET is conducted.

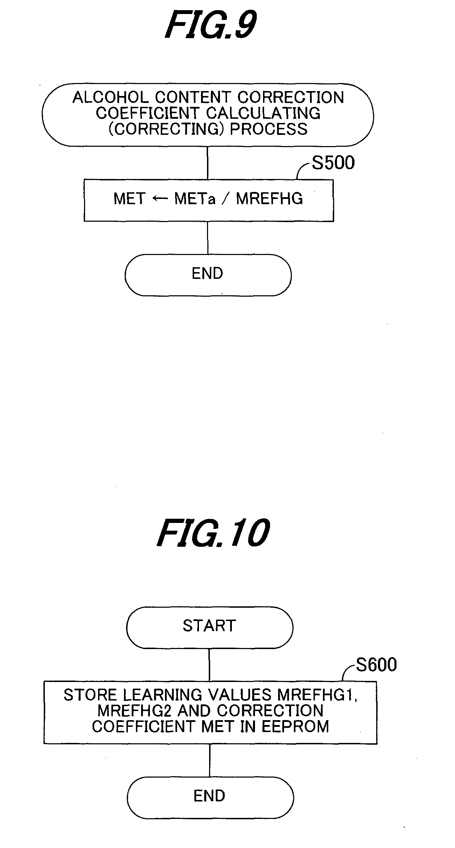

FIG. 9 is a subroutine flowchart showing the alcohol content correction coefficient calculating (correcting) process. As shown in FIG. 9, in S500, the alcohol content correction coefficient MET is calculated based on the temporary alcohol content correction coefficient METa and machine difference correction coefficient MREFHG calculated in the FIG. 8 flowchart. Specifically, a value obtained by dividing the temporary alcohol content correction coefficient METa by the machine difference correction coefficient MREFHG is set (stored) as the alcohol content correction coefficient MET.

Thus, in S500, the temporary alcohol content correction coefficient METa is corrected with the stored machine difference correction coefficient MREFHG, i.e., corrected with the coefficient MREFHG so as not to be affected by the machine difference, and the thus-corrected value is set as the alcohol content correction coefficient MET.

Owing to the above configuration, when the engine 10 operation is in the operation area in which the feedback control is not implemented, the fuel injection amount Tout can be corrected with the corrected alcohol content correction coefficient MET (which is not affected by the machine difference), thereby improving the fuel correction control accuracy.

FIG. 10 is a flowchart showing the operation of the apparatus to be executed by the ECU 30 at predetermined intervals, e.g., 3 milliseconds, concurrently with the FIG. 3 flowchart.

As shown in FIG. 10, in S600, the machine difference learning value (first area) MREFHG1, machine difference learning value (second area) MREFHG2 and alcohol content correction coefficient MET calculated in the flowcharts of FIGs. 8 and 9 are stored in the EEPROM 30i.

As a result, when the ECU 30 is activated next time (i.e., at the next engine start), the alcohol content correction coefficient MET and other values stored (learned) in the previous engine operation can be read out from the EEPROM 30i and it makes possible to correct the fuel injection amount Tout based on those values immediately after the engine start, thereby obtaining the optimal fuel injection amount Tout in accordance with the alcohol content.

As stated above, in the embodiment of this invention, it is configured to have an apparatus for controlling an internal combustion engine 10 having a feedback control means ($O_2$ sensor 60, ECU 30, S12, S200 to S208, S216, S218) for implementing feedback control to detect an air/fuel ratio of exhaust gas of the engine 10, calculate a feedback correction coefficient MHG of a fuel injection amount Tout based on the detected air/fuel ratio and correct the fuel injection amount Tout with the calculated feedback correction coefficient MHG, characterized by area setting means (ECU 30, S14, S300 to S314) for dividing an operation area of the engine 10 into a plurality of (three) areas (high speed area A, medium speed area B and low speed area C) based on an engine speed (NE) and (throttle opening TH) load and setting one of the areas as a reference area; machine difference correction coefficient storing means (ECU 30, S16, S400 to S424, S430 to S442) for calculating a ratio of the feedback correction coefficient (feedback correction coefficient average (reference area) MREFHGSTDB of the feedback correction coefficient MHG) calculated when operation of the engine 10 is in the reference area to the feedback correction coefficient (feedback correction coefficient average (first or second area) MREFHG1B, MREFHG2B of the feedback correction coefficient MHG) calculated when the operation of the engine 10 is out of the reference area and storing the ratio as a machine difference correction coefficient MREFHG used for correcting an individual difference of the engine 10; and an alcohol content correction coefficient storing means (ECU 30, S16 to S18, S406, S408, S416, S418, S434, S436, S500, S600) for calculating an alcohol content correction coefficient (temporary alcohol content correction coefficient METa) in accordance with an alcohol content of fuel based on the calculated feedback correction coefficient (MREFHGSTDB, MREFHG1B, MREFHG2B), correcting the calculated alcohol content correction coefficient with the stored machine difference correction coefficient MREFHG and storing the corrected alcohol content correction coefficient, wherein the fuel injection amount Tout is corrected with the corrected alcohol content correction coefficient (alcohol content correction coefficient MET) when the operation of the engine 10 is in an operation area in which the feedback control is not implemented.

With this, even when the engine 10 operation is in the operation area in which the feedback control is not implemented, the fuel injection amount Tout can be corrected with the alcohol content correction coefficient MET that was corrected so as not to be affected by the machine difference, i.e., can be corrected to be the optimal value in accordance with the alcohol content, thereby improving the fuel correction control accuracy.

Further, since it is configured to correct the fuel injection amount Tout in accordance with the alcohol content without installment of a sensor, etc., for detecting the alcohol content of the fuel, it becomes possible to avoid the increase in cost and the complicated structure of the apparatus.

The area setting means sets two or more areas (first and second areas) other than the reference area (S14, S306 to S314) and the machine difference correction coefficient storing means replaces the feedback correction coefficient (average (reference area) MREFHGSTDB) to be calculated when the operation of the engine 10 is in the reference area by the alcohol content correction coefficient MET calculated when the operation of the engine 10 is in one of the two or more areas (first and second areas) other than the reference area if the feedback correction coefficient (average (reference area) MREFHGSTDB) has not been calculated when the operation of the engine 10 was in the reference area (S16, S420, S426, S428, S438, S444, S446). In other words, even if the engine 10 operation is not in the reference area and the feedback correction coefficient (average (reference area) MREFHGSTDB) at that time is not calculated, the feedback correction coefficient (average (reference area) MREFHGSTDB) calculated when the engine 10 operation is in the reference area is replaced by the alcohol content correction coefficient MET calculated when the engine 10 operation is in one of the areas other than the reference area to calculate the aforesaid ratio, and the calculated ratio is stored as the machine difference correction coefficient MREFHG.

With this, it becomes possible to correct the alcohol content correction coefficient (temporary alcohol content correction coefficient METa) with the stored machine difference correction coefficient MREFHG and then correct the fuel injection amount Tout with the corrected alcohol content correction coefficient (alcohol content correction coefficient MET). Therefore, the fuel injection amount Tout can be reliably corrected to be the optimal value in accordance with the alcohol content.

The area setting means sets the reference area based on a type of a vehicle in which the engine 10 is installed (S14, S306 to S314). With this, it becomes possible to set the reference area with the operation area in which the machine difference is hardly seen separately for respective vehicle types and therefore, calculate the machine difference correction coefficient MREFHG more accurately, thereby further improving the fuel correction control accuracy.

It should be noted that the motorcycle is exemplified as the vehicle, but it is not limited thereto and can be another type of vehicle such as a scooter, ATV (All Terrain Vehicle) or the like, a seat or saddle of which the operator straddles, or any other type of vehicle (e.g., a four-wheel vehicle).

INDUSTRIAL APPLICABILITY

According to this invention, in a control apparatus for an internal combustion engine, it is configured to divide an operation area of the engine into a plurality of areas and set one of the areas as a reference area; calculate a ratio of the feedback correction coefficient calculated when operation of the engine is in the reference area to the feedback correction coefficient calculated when the operation of the engine is out of the reference area and store the ratio as a machine difference correction coefficient; and calculate an alcohol content correction coefficient based on the feedback correction coefficient, correct the alcohol content correction coefficient with the machine difference correction coefficient and store the corrected alcohol content correction coefficient, wherein the fuel injection amount is corrected with the corrected alcohol content correction coefficient when the operation of the engine is in an operation area in which the feedback control is not implemented. With this, even when the engine operation is in the operation area in which the feedback control is not implemented, the fuel injection amount can be corrected with the alcohol content correction coefficient that was corrected so as not to be affected by the machine difference, i.e., can be corrected to be the optimal value in accordance with the alcohol content, thereby improving the fuel correction control accuracy. Further, since it is configured to correct the fuel injection amount in accordance with the alcohol content without installment of a sensor, etc., for detecting the alcohol content of the fuel, it becomes possible to avoid the increase in cost and the complicated structure of the apparatus.

DESCRIPTION OF SYMBOLS

10 Engine (Internal combustion engine), 20 Injector, 30 ECU (Electronic Control Unit), 60 $O_2$ sensor

**Claims**

1. An apparatus for controlling an internal combustion engine (10) having a feedback control means (60, 30, S12, S200 to S208, S216, S218) for implementing feedback control to detect an air/fuel ratio of exhaust gas of the engine, calculate a feedback correction coefficient (MHG) of a fuel injection amount (Tout) based on the detected air/fuel ratio and correct the fuel injection amount with the calculated feedback correction coefficient,
**characterized by**:

   area setting means (30, S14, S300 to S314) for dividing an operation area of the engine into a plurality of areas (A, B and C) based on an engine speed (NE) and load (TH) and setting one of the areas as a reference area;
   machine difference correction coefficient storing means (30, S16, S400 to S424, S430 to S442) for calculating a ratio of the feedback correction coefficient (MREFHGSTDB) calculated when operation of the engine is in the reference area to the feedback correction coefficient (MREFHG1B, MREFHG2B) calculated when the operation of the engine is out of the reference area and storing the ratio as a machine difference correction coefficient (MREFHG) used for correcting an individual difference of the engine; and
   an alcohol content correction coefficient storing means (30, S16 to S 18, S406, S408, S416, S418, S434, S436, S500, S600) for calculating an alcohol content correction coefficient (METa) in accordance with an alcohol content of fuel based on the calculated feedback correction coefficient (MREFHGSTDB, MREFHG1B, MREFHG2B), correcting the calculated alcohol content correction coefficient with the stored machine difference correction coefficient (MREFHG) and storing the corrected alcohol content correction coefficient (MET),
   wherein the fuel injection amount is corrected with the corrected alcohol content correction coefficient (MET) when the operation of the engine is in an operation area in which the feedback control is not implemented.

2. The apparatus according to claim l, wherein the area setting means sets two or more areas other than the reference area (S14, S306 to S314) and the machine difference correction coefficient storing means replaces the feedback correction coefficient (MREFHGSTDB) to be calculated when the operation of the engine is in the reference area by the alcohol content correction coefficient (MET) calculated when the operation of the engine is in one of the two or more areas other than the reference area if the feedback correction coefficient (MREFHGSTDB) has not been calculated when the operation of the engine was in the reference area (S16, S420, S426, S428, S438, S444, S446).

3. The apparatus according to claim 1 or 2, wherein the area setting means sets the reference area based on a type of a vehicle in which the engine is installed (S 14, S306 to S314).

4. A method for controlling an internal combustion engine (10) having a step of implementing feedback control to detect an air/fuel ratio of exhaust gas of the engine, calculating a feedback correction coefficient (MHG) of a fuel injection amount (Tout) based on the detected air/fuel ratio and correcting the fuel injection amount with the calculated feedback correction coefficient (S12, S200 to S208, S216, S218), **characterized by** the steps of:

dividing an operation area of the engine into a plurality of areas (A, B and C) based on an engine speed (NE) and load (TH) and setting one of the areas as a reference area (S 14, S300 to S314);

calculating a ratio of the feedback correction coefficient (MREFHGSTDB) calculated when operation of the engine is in the reference area to the feedback correction coefficient (MREFHG1B, MREFHG2B) calculated when the operation of the engine is out of the reference area and storing the ratio as a machine difference correction coefficient (MREFHG) used for correcting an individual difference of the engine (S16, S400 to S424, S430 to S442); and

calculating an alcohol content correction coefficient (METa) in accordance with an alcohol content of fuel based on the calculated feedback correction coefficient (MREFHGSTDB, MREFHG1B, MREFHG2B), correcting the calculated alcohol content correction coefficient with the stored machine difference correction coefficient (MREFHG) and storing the corrected alcohol content correction coefficient (MET) (S 16 to S18, S406, S408, S416, S418, S434, S436, S500, S600),

wherein the fuel injection amount is corrected with the corrected alcohol content correction coefficient (MET) when the operation of the engine is in an operation area in which the feedback control is not implemented.

5. The method according to claim 4, wherein the step of setting sets two or more areas other than the reference area (S14, S306 to S314) and the step of storing the machine difference correction coefficient replaces the feedback correction coefficient (MREFHGSTDB) to be calculated when the operation of the engine is in the reference area by the alcohol content correction coefficient (MET) calculated when the operation of the engine is in one of the two or more areas other than the reference area if the feedback correction coefficient (MREFHGSTDB) has not been calculated when the operation of the engine was in the reference area (S16, S420, S426, S428, S438, S444, S446).

6. The method according to claim 4 or 5, wherein the step of setting sets the reference area based on a type of a vehicle in which the engine is installed (S 14, S306 to S314).

**Patentansprüche**

1. Vorrichtung zum Regeln eines Verbrennungsmotors (10) mit einem Rückkopplungsregelmittel (60, 30, S12, S200 bis S208, S216, S218) zum Implementieren von rückkoppelnder Regelung zum Detektieren eines Luftkraftstoffverhältnisses von Abgas des Motors, Berechnen eines Rückkopplungskorrekturkoeffizienten (MHG) einer Kraftstoffeinspritzmenge (Tout) basierend auf dem detektierten Luftkraftstoffverhältnis, und Korrigieren der Kraftstoffeinspritzmenge mit dem berechneten Rückkopplungskorrekturkoeffizienten, **gekennzeichnet durch**:

ein Bereichssetzmittel (30, S14, S300 bis S314) zum Unterteilen eines Betriebsbereichs des Motors in eine Mehrzahl von Bereichen (A, B und C) basierend auf einer Motordrehzahl (NE) und Last (TH), und Setzen von einem der Bereiche als Referenzbereich;

ein Maschinendifferenzkorrekturkoeffizientenspeichermittel (30, S16, S400 bis S424, S430 bis S442) zum Berechnen eines Verhältnisses des Rückkopplungskorrekturkoeffizienten (MREFHGSTDB), der berechnet wird, wenn der Betrieb des Motors im Referenzbereich ist, zu dem Rückkopplungskorrekturkoeffizienten (MREFHG1B, MREFHG2B), der berechnet wird, wenn der Betrieb des Motors außerhalb des Referenzbereichs ist, und Speichern des Verhältnisses als Maschinendifferenzkorrekturkoeffizient (MREFHG), der zum Korrigieren einer individuellen Differenz des Motors verwendet wird; und

ein Alkoholgehaltkorrekturkoeffizientenspeichermittel (30, S16 bis S18, S406, S408, S416, S418, S434, S436, S500, S600) zum Berechnen eines Alkoholgehaltkorrekturkoeffizienten (METa) gemäß einem Alkoholgehalt von Kraftstoff basierend auf dem berechneten Rückkopplungskorrekturkoeffizienten (MREFHGSTDB, MREFHG1B, MREFHG2B);

Korrigieren des berechneten Alkoholgehaltkorrekturkoeffizienten mit dem gespeicherten Maschinendifferenzkorrekturkoeffizienten (MREFHG) und Speichern des korrigierten Alkoholgehaltkorrekturkoeffizienten (MET), worin die Kraftstoffeinspritzmenge mit dem korrigierten Alkoholgehaltkorrekturkoeffizienten (MET) korrigiert wird, wenn der Betrieb des Motors in einem Betriebsbereich ist, in dem die Rückkopplungsregelung nicht implementiert ist.

**2.** Die Vorrichtung nach Anspruch 1, worin das Bereichsetzmittel zwei oder mehr andere Bereiche als den Referenzbereich setzt (S14, S306 bis S314), und das Maschinendifferenzkorrekturkoeffizientenspeichermittel den Rückkopplungskorrekturkoeffizienten (MREFHGSTDB), der zu berechnen ist, wenn der Betrieb des Motors im Referenzbereich ist, durch den Alkoholgehaltkorrekturkoeffizienten (MET) ersetzt, der berechnet wird, wenn der Betriebsbereich des Motors in einem oder zwei oder mehr anderen Bereichen als dem Referenzbereich ist, wenn der Rückkopplungskorrekturkoeffizient (MREFHGSTDB) nicht berechnet worden ist, wenn der Betrieb des Motors in dem Referenzbereich war (S16, S420, S426, S428, S438, S444, S446).

**3.** Die Vorrichtung nach Anspruch 1 oder 2, worin das Bereichsetzmittel den Referenzbereich basierend auf einem Typ eines Fahrzeugs setzt, in dem der Motor angebracht ist (S14, S306 bis S314).

**4.** Verfahren zum Regeln eines Verbrennungsmotors (10) mit einem Schritt zum Implementieren von rückkoppelnder Regelung zum Detektieren eines Luftkraftstoffverhältnisses vom Abgas des Motors, Berechnen eines Rückkopplungskorrekturkoeffizienten (MHG) einer Kraftstoffeinspritzmenge (Tout) basierend auf dem detektierten Luftkraftstoffverhältnis, und Korrigieren der Kraftstoffeinspritzmenge mit dem berechneten Rückkopplungskorrekturkoeffizienten (S12, S200 bis S208, S216, S218),
**gekennzeichnet durch** die Schritte:

Unterteilen eines Betriebsbereichs des Motors in eine Mehrzahl von Bereichen (A, B und C) basierend auf einer Motordrehzahl (NE) und Last (TH), und Setzen von einem der Bereiche als Referenzbereich (S14, S300 bis S314);
Berechnen eines Verhältnisses des Rückkopplungskorrekturkoeffizienten (MREFHGSTDB), der berechnet wird, wenn der Betrieb des Motors in dem Referenzbereich ist, zu dem Rückkopplungskorrekturkoeffizienten (MREFHG1B, MREFHG2B), der berechnet wird, wenn der Betrieb des Motors außerhalb des Referenzbereichs ist, und Speichern des Verhältnisses als Maschinendifferenzkorrekturkoeffizient (MREFHG), der zum Korrigieren einer individuellen Differenz des Motors verwendet wird (S16, S400 bis S424, S430 bis S442); und
Berechnen eines Alkoholgehaltkorrekturkoeffizienten (METa) gemäß einem Alkoholgehalt von Kraftstoff basierend auf dem berechneten Rückkopplungskorrekturkoeffizienten (MREFHGSTDB, MREFHG1B, MREFHG2B), Korrigieren des berechneten Alkoholgehaltkorrekturkoeffizienten mit dem gespeicherten Maschinendifferenzkorrekturkoeffizienten (MREFHG), und Speichern des korrigierten Alkoholgehaltkorrekturkoeffizienten (MET) (S16, bis S18, S406, S408, S416, S418, S434, S436, S500, S600),
worin die Kraftstoffeinspritzmenge mit dem korrigierten Akoholgehaltkorrekturkoeffizienten (MET) korrigiert wird, wenn der Betrieb des Motors in einem Betriebsbereich ist, in dem die Rückkopplungsregelung nicht implementiert ist.

**5.** Das Verfahren nach Anspruch 4, worin der Schritt zum Setzen zwei oder mehr anderer Bereiche als den Referenzbereich setzt (S14, S306 bis S314), und der Schritt zum Speichern den Maschinendifferenzkorrekturkoeffizienten (MREFHGSTDB), der zu berechnen ist, wenn der Betrieb des Motors im Referenzbereich ist, durch den Alkoholgehaltkorrekturkoeffizienten (MET) ersetzt, der berechnet wird, wenn der Betriebsbereich des Motors in einem oder zwei oder mehr anderen Bereichen als dem Referenzbereich ist, wenn der Rückkopplungskorrekturkoeffizient (MREFHGSTDB) nicht berechnet worden ist, wenn der Betrieb des Motors in dem Referenzbereich war (S16, S420, S426, S428, S438, S444, S446).

**6.** Verfahren nach Anspruch 4 oder 5, worin der Schritt zum Setzen den Referenzbereich basierend auf einem Typ eines Fahrzeugs setzt, in dem der Motor angebracht ist (S14, S306 bis S314).

**Revendications**

**1.** Dispositif de commande pour moteur à combustion interne (10) ayant un dispositif de commande de rétroaction (60, 30, S12, S200 à S208, S216, S218) pour implémenter une commande de rétroaction afin de détecter un rapport air/carburant des gaz d'échappement du moteur, calculer un coefficient de correction de rétroaction (MHG) d'une quantité d'injection de carburant (Tout) basé sur le rapport air/carburant détecté et corriger la quantité d'injection de carburant à l'aide du coefficient de correction de rétroaction,
**caractérisé par**
des moyens de définition d'une plage (30, S14, S300 à S314) pour diviser une plage de fonctionnement du moteur en une pluralité de plages (A, B et C) sur base d'une vitesse (NE) et d'une charge (TH) du moteur et définir une des plages comme plage de référence;

des moyens de stockage d'un coefficient de correction d'une différence de machine (30, S16, S400 à S424, S430 à S442) pour calculer un rapport du coefficient de correction de rétroaction (MREFHGSTDB) calculé lorsque le fonctionnement du moteur est dans la plage de référence pour le coefficient de correction de rétroaction (MREFHG1B, MREFHG2B) calculé lorsque le fonctionnement du moteur est hors de la plage de référence pour le coefficient de correction de rétroaction et stocker le rapport comme un coefficient de correction d'une différence de machine (MREFHG) utilisé pour corriger une différence individuelle du moteur; et

des moyens de stockage d'un coefficient de correction de la teneur en alcool (30, S16 à S18, S406, S408, S416, S418, S434, S436, S500, S600) pour calculer un coefficient de correction de la teneur en alcool (METa) en fonction d'une teneur en alcool du carburant basée sur le coefficient de correction de rétroaction (MREFHGSTDB, MREFHG1B, MREFHG2B) calculé, corriger le coefficient de correction de la teneur en alcool calculé avec le coefficient de correction d'une différence de machine (MREFHG) stocké et stocker le coefficient de correction corrigé de la teneur en alcool (MET),

dans lequel la quantité d'injection de carburant est corrigée avec le coefficient de correction de la teneur en alcool (MET) corrigé lorsque le fonctionnement du moteur est dans une plage de fonctionnement dans laquelle la commande de rétroaction n'est pas implémentée.

2. Dispositif suivant la revendication 1, dans lequel le moyen de définition de plage définit deux plages ou plus autres que la plage de référence (S14, S306 à S314) et le moyen de stockage d'un coefficient de correction d'une différence de machine remplace le coefficient de correction de rétroaction (MREFHGSTDB) à calculer lorsque le fonctionnement du moteur est dans la plage de référence par le coefficient de correction de teneur en alcool (MET) calculé lorsque le fonctionnement du moteur est dans une des deux plages ou plus autres que la plage de référence si le coefficient de correction de rétroaction (MREFHGSTDB) n'a pas été calculé lorsque le fonctionnement du moteur était dans la plage de référence (S16, S420, S426, S428, S438, S444, S446).

3. Dispositif suivant la revendication 1 ou 2, dans lequel le moyen de définition de plage définit la plage de référence sur base d'un type de véhicule dans lequel le moteur est installé (S14, S306 à S314).

4. Procédé de commande d'un moteur à combustion interne (10) ayant une étape d'implémentation d'une commande de rétroaction afin de détecter un rapport air/carburant des gaz d'échappement du moteur, calculant un coefficient de correction de rétroaction (MHG) d'une quantité d'injection de carburant (Tout) basé sur le rapport air/carburant détecté et corrigeant la quantité d'injection de carburant à l'aide du coefficient de correction de rétroaction (S12, S200 à S208, S216, S218),

**caractérisé par** les étapes:

de la division d'une plage de fonctionnement du moteur en une pluralité de plages (A, B et C) sur base d'une vitesse (NE) et d'une charge (TH) du moteur et la définition d'une des plages comme plage de référence (S14, S300 à S314);

du calcul d'un rapport du coefficient de correction de rétroaction (MREFHGSTDB) calculé lorsque le fonctionnement du moteur est dans la plage de référence pour le coefficient de correction de rétroaction (MREFHG1B, MREFHG2B) calculé lorsque le fonctionnement du moteur est hors de la plage de référence et le stockage du rapport comme un coefficient de correction d'une différence de machine (MREFHG) utilisé pour corriger une différence individuelle du moteur (S16, S400 à S424, S430 à S442); et

du calcul d'un coefficient de correction de la teneur en alcool (METa) en fonction d'une teneur en alcool du carburant basée sur le coefficient de correction de rétroaction (MREFHGSTDB, MREFHGIB, MREFHG2B) calculé, la correction du coefficient de correction de la teneur en alcool calculé avec le coefficient de correction d'une différence de machine (MREFHG) stocké et la stockage du coefficient de correction de la teneur en alcool (MET) corrigé (S16 à S18, S406, S408, S416, S418, S434, S436, S500, S600),

dans lequel la quantité d'injection de carburant est corrigée avec le coefficient de correction de la teneur en alcool (MET) corrigé lorsque le fonctionnement du moteur est dans une plage de fonctionnement dans laquelle la commande de rétroaction n'est pas implémentée.

5. Procédé suivant la revendication 4, dans lequel l'étape de définition définit deux plages ou plus autres que la plage de référence (S14, S306 à S314) et l'étape de stockage d'un coefficient de correction de la différence de machine remplace le coefficient de correction de rétroaction (MREFHGSTDB) à calculer lorsque le fonctionnement du moteur est dans la plage de référence par le coefficient de correction de teneur en alcool (MET) calculé lorsque le fonctionnement du moteur est dans une des deux plages ou plus autres que la plage de référence si le coefficient de correction de rétroaction (MREFHGSTDB) n'a pas été calculé lorsque le fonctionnement du moteur était dans la plage de référence (S16, S420, S426, S428, S438, S444, S446).

6. Procédé suivant la revendication 4 ou 5, dans lequel l'étape de définition définit la plage de référence sur base d'un type de véhicule dans lequel le moteur est installé (S14, S306 à S314).

# FIG.1

# FIG.2

CRANK ANGLE SENSOR — 64

44

WAVEFORM SHAPING CKT — 30a

SPEED COUNTER — 30b

THROTTLE OPENING SENSOR — 54
INTAKE AIR TEMPERATURE SENSOR — 56
ABSOLUTE PRESSURE SENSOR — 58
$O_2$ SENSOR — 60
COOLANT TEMPERATURE SENSOR — 62

A/D CONVERSION CKT — 30c

CPU — 30d

IGNITION CKT — 30e → IGNITION COIL — 36
DRIVE CKT — 30f → INJECTOR — 20
DRIVE CKT — 30g → FUEL PUMP — 24
ROM — 30h
EEPROM — 30i
RAM — 30j
TIMER — 30k

30

EP 2 431 592 B1

# FIG.3

```
            ( START )
                |
                |        ⌐S10
   ┌────────────────────────┐
   │    SET INITIAL VALUES   │
   └────────────────────────┘
                |
                |        ⌐S12
   ┌────────────────────────┐
   │   CALCULATE FEEDBACK    │
   │ CORRECTION COEFFICIENT  │
   └────────────────────────┘
                |
                |        ⌐S14
   ┌────────────────────────┐
   │ DETERMINE OPERATION AREA│
   └────────────────────────┘
                |
                |        ⌐S16
   ┌────────────────────────┐
   │ CALCULATE MACHINE DIFFERENCE │
   │   CORRECTION COEFFICIENT     │
   └────────────────────────┘
                |
                |        ⌐S18
   ┌────────────────────────┐
   │ CALCULATE ALCOHOL CONTENT │
   │   CORRECTION COEFFICIENT  │
   └────────────────────────┘
                |
                |
             (  END  )
```

# FIG.4

INITIAL VALUE SETTING PROCESS

IS THIS FIRST PROGRAM LOOP ⟋S100

NO

YES

⟋S102

SET INITIAL VALUES OF LEARNING VALUES, FLAGS, ETC.

MREFHGSTD ← 1.0 TIME
MREFHG1 ← MREFHG1 EEPROM-STORED VALUE
MREFHG2 ← MREFHG2 EEPROM-STORED VALUE
MET ← MET EEPROM-STORED VALUE
F_MREFHGSTD ← 0
F_MREFHG1 ← 0
F_MREFHG2 ← 0
F_VHGREF ← 0
MREFHGSTDB ← MET
MREFHG1B ← MET × MREFHG1
MREFHG2B ← MET × MREFHG2

END

# FIG.5

```
        ┌─────────────────────────┐
        │   FEEDBACK CORRECTION    │
        │  COEFFICIENT CALCULATING │
        │         PROCESS          │
        └────────────┬────────────┘
                     │              S200
        ┌────────────┴────────────┐
        │   UPDATE PREVIOUS O₂     │
        │     SENSOR VOLTAGE       │
        │   DETERMINATION FLAG     │
        │  F_VHGREF1 ← F_VHGREF    │
        └────────────┬────────────┘
                     │              S202
        ┌────────────┴────────────┐
        │   READ IN O₂ SENSOR      │
        │   OUTPUT VOLTAGE VHG     │
        └────────────┬────────────┘
                     │              S204
```

UPDATE PREVIOUS $O_2$ SENSOR VOLTAGE DETERMINATION FLAG F_VHGREF1 ← F_VHGREF  — S200

READ IN $O_2$ SENSOR OUTPUT VOLTAGE VHG  — S202

S204  VHG ≥ VHGREF   NO(LEAN)

YES(RICH)  S206

SET → 1 $O_2$ SENSOR VOLTAGE DETERMINATION FLAG F_VHGREF ← 1 (RICH)

S216  RESET → 0 $O_2$ SENSOR VOLTAGE DETERMINATION FLAG F_VHGREF ← 0 (LEAN)

S208  MHG ← MHG − $\Delta$

S218  MHG ← MHG + $\Delta$

S210  PREVIOUSLY DETERMINED TO BE LEAN F_VHGREF1 = 0   YES     YES   PREVIOUSLY DETERMINED TO BE RICH F_VHGREF1 = 1  S220

NO  S212   S214   NO  S222

RESET → 0 RICH/LEAN INVERSION FLAG F_VHGTGL ← 0 (NOT INVERTED)   — S212

SET → 1 RICH/LEAN INVERSION FLAG F_VHGTGL ← 1 (INVERTED)   — S214

RESET → 0 RICH/LEAN INVERSION FLAG F_VHGTGL ← 0 (NOT INVERTED)   — S222

END

# FIG.6

```
         ( OPERATION AREA
           DETERMINING PROCESS )
                    |
                    |          S300
        ┌───────────────────────┐
        │   DETECT ENGINE       │
        │     SPEED NE          │
        └───────────────────────┘
                    |          S302
        ┌───────────────────────┐
        │  DETECT THROTTLE      │
        │    OPENING TH         │
        └───────────────────────┘
                    |          S304
        ┌───────────────────────┐
        │ DETERMINE OPERATION   │
        │   AREA OF ENGINE      │
        └───────────────────────┘
                    |
                    |          S306
              ◇ IS                    NO
          REFERENCE AREA ─────────────────┐
          NUMBER SET TO 3                  │
          MREFSTDZ = 3 ◇                    │
               | YES                        │
               |                            |  S310
               |                    ◇ IS              NO
               |                REFERENCE AREA ───────────┐
               |                NUMBER SET TO 2            │
               |                MREFSTDZ = 2 ◇             │
               |                     | YES                 │
               |   S308               |   S312             │   S314
  ┌─────────────────────┐ ┌─────────────────────┐ ┌─────────────────────┐
  │ SET REFERENCE AREA  │ │ SET REFERENCE AREA  │ │ SET REFERENCE AREA  │
  │ HIGH SPEED AREA A ← │ │ HIGH SPEED AREA A ← │ │ HIGH SPEED AREA A ← │
  │ REFERENCE AREA      │ │ SECOND AREA         │ │ SECOND AREA         │
  │ MEDIUM SPEED AREA B │ │ MEDIUM SPEED AREA B │ │ MEDIUM SPEED AREA B │
  │ ← SECOND AREA       │ │ ← REFERENCE AREA    │ │ ← FIRST AREA        │
  │ LOW SPEED AREA C ←  │ │ LOW SPEED AREA C ←  │ │ LOW SPEED AREA C ←  │
  │ FIRST AREA          │ │ FIRST AREA          │ │ REFERENCE AREA      │
  └─────────────────────┘ └─────────────────────┘ └─────────────────────┘
               |                     |                   |
               └─────────────────────┴───────────────────┘
                    |
              (  END  )
```

# FIG.7

| | | REFERENCE AREA NUMBER SET VALUE MREFZSTDZ |
|---|---|---|
| ▮▮▮ | LOW SPEED AREA C | 1 |
| ▨ | MEDIUM SPEED AREA B | 2 |
| ▦ | HIGH SPEED AREA A | 3 |

FEEDBACK CONTROL AREA

(FULLY OPENED)

THROTTLE OPENING TH (deg)

A

B

(FULLY CLOSED) 0

C

0 (LOW)

ENGINE SPEED NE (rpm)

(HIGH)

**FIG.8**

MACHINE DIFFERENCE CORRECTION COEFFICIENT CALCULATING PROCESS

S400 — WAS RICH/LEAN INVERSION CONDUCTED F_VHGTGL=1 — NO / YES

S402 — REFERENCE AREA — NO / YES

S404 — SET REFERENCE AREA HISTORY FLAG F_MREFHGSTD ← 1

S406 — SET FEEDBACK CORRECTION COEFFICIENT AVERAGE (REFERENCE AREA) MREFHGSTDB ←MHG × CHGREF + MREFHGSTD × (1−CHGREF)

S408 — SET TEMPORARY ALCOHOL CONTENT CORRECTION COEFFICIENT META ← MREFHGSTDB

S410 — SET MACHINE DIFFERENCE CORRECTION COEFFICIENT MREFHG ← 1.0 TIME

S412 — FIRST AREA — NO / YES

S414 — SET FIRST AREA HISTORY FLAG F_MREFHG1 ← 1

S416 — SET FEEDBACK CORRECTION COEFFICIENT AVERAGE (FIRST AREA) MREFHG1B ←MHG × CHGREF + MREFHG1B × (1−CHGREF)

S418 — SET TEMPORARY ALCOHOL CONTENT CORRECTION COEFFICIENT META ← MREFHG1B

S420 — IS THERE REFERENCE AREA HISTORY RECORD F_MREFHGSTD=1 — YES / NO

S422 — CALCULATE AND SET MACHINE DIFFERENCE LEARNING VALUE (FIRST AREA) ON BASIS OF REFERENCE AREA MREFHG1 ← MREFHG1B/MREFHGSTDB

S426 — IS THERE SECOND AREA HISTORY RECORD F_MREFHG2=1 — NO / YES

S428 — CALCULATE AND SET MACHINE DIFFERENCE LEARNING VALUE (FIRST AREA) ON BASIS OF SECOND AREA MREFHG1 ←MREFHG2 × MREFHG1B/MREFHG2B

S424 — SET MACHINE DIFFERENCE CORRECTION COEFFICIENT MREFHG ← MREFHG1

S430 — SECOND AREA — NO / YES

S432 — SET SECOND AREA HISTORY FLAG F_MREFHG2 ← 1

S434 — SET FEEDBACK CORRECTION COEFFICIENT AVERAGE (SECOND AREA) MREFHG2B ←MHG × CHGREF + MREFHG2B × (1−CHGREF)

S436 — SET TEMPORARY ALCOHOL CONTENT CORRECTION COEFFICIENT META ← MREFHG2B

S438 — IS THERE REFERENCE AREA HISTORY RECORD F_MREFHGSTD=1 — YES / NO

S440 — CALCULATE AND SET MACHINE DIFFERENCE LEARNING VALUE (FIRST AREA) ON BASIS OF REFERENCE AREA MREFHG2 ← MREFHG2B/ MREFHGSTDB

S444 — IS THERE FIRST AREA HISTORY RECORD F_MREFHG1=1? — NO / YES

S446 — CALCULATE AND SET MACHINE DIFFERENCE LEARNING VALUE (SECOND AREA) ON BASIS OF FIRST AREA MREFHG2 ←MREFHG1 × MREFHG2B/MREFHG1B

S442 — SET MACHINE DIFFERENCE CORRECTION COEFFICIENT MREFHG ← MREFHG2

END

# FIG.9

```
ALCOHOL CONTENT CORRECTION
COEFFICIENT CALCULATING
(CORRECTING) PROCESS
```

S500

```
MET ← METa / MREFHG
```

END

# FIG.10

START

S600

```
STORE LEARNING VALUES MREFHG1,
MREFHG2 AND CORRECTION
COEFFICIENT MET IN EEPROM
```

END

**EP 2 431 592 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO6319885131 B